# FASCICULE DE BREVET EUROPEEN

(11) **EP 0 374 606 B1**
(45) Date de publication et mention de la délivrance du brevet: **25.08.1993**
(21) Numéro de dépôt: 89122593.0
(22) Date de dépôt: 07.12.1989
(51) Int. Cl.: B24B 47/22, B23Q 15/26, B23Q 17/24, B24B 3/26

(54) **Procédé et dispositif de positionnement angulaire d'une pièce sur une machine-outil au moyen d'un faisceau laser**
Verfahren und Vorrichtung zum winkeligen Einstellen eines Werkstückes auf einer Werkzeugmaschine mittels eines Laserstrahles
Method and apparatus for positioning a work piece on a machine tool at an angle by the use of a laser beam

(30) Priorité: 21.12.1988 CH 4727/88
(43) Date de publication de la demande: 27.06.1990
(73) Titulaire: ROLLOMATIC S.A., CH-2525 Le Landeron (CH)
(72) Inventeur: Gremaud, Henri, CH-2525 Le Landeron (CH); Gremaud, Martial, CH-2525 Le Landeron (CH); Rollier, Michel, CH-2525 Le Landeron (CH)
(74) Mandataire: Ebbinghaus, Dieter, Dipl.-Ing.

(56) Documents cités:
- DE-A- 1 961 010
- DE-A- 3 419 287
- FR-A- 2 302 817
- FR-A- 2 372 000
- US-A- 4 792 228

## Description

La présente invention concerne un procédé de positionnement permettant de placer une pièce à usiner, par exemple une ébauche de foret, dans une position angulaire prédéterminée sur une machine-outil. Elle concerne également un dispositif ou un appareil mettant en oeuvre ce procédé.

En prenant un foret comme exemple, sa réalisation consiste d'abord à produire une ébauche dont seule l'extrémité, ou la pointe, se trouve encore à l'état brut, puis à affûter cette pointe sur une machine à meuler pour lui donner une forme conique et former les arrêtes de coupe, celles-ci étant définies par l'intersection de deux surfaces.

L'ébauche, dont le diamètre est égal au diamètre nominal du foret, comporte des rainures hélicoïdales ou droites pour évacuer les copeaux, les flancs de ces rainures formant l'une des surfaces des arrêtes de coupe.

L'affûtage a pour but de façonner l'autre surface de chaque arrête. C'est une opération délicate qui doit être faite avec précision car l'angle de cette surface par rapport à l'autre surface de l'arrête influence directement la qualité du foret. Il est donc indispensable de placer l'ébauche sur la machine dans une position angulaire bien définie, ceci pour que la position des rainures par rapport à la meule soit connue avec exactitude et permette d'usiner la pointe de manière que l'angle entre les deux surfaces définissant les arrêtes de coupe ait la valeur voulue.

Le positionnement angulaire des rainures d'une ébauche de foret a été obtenu jusqu'à présent par des procédés consistant, par exemple, à amener le flanc d'une rainure en contact d'un palpeur mécanique. Ou bien, comme cela est décrit en détail dans le brevet CH 659 790, à disposer l'ébauche dans un flux de rayons lumineux parallèles produit par une lampe, puis à mesurer l'intensité du flux intercepté par l'ébauche au moyen d'un dispositif photosensible, cette intensité étant représentative de la position angulaire des rainures.

Le procédé utilisant un palpeur présente l'inconvénient de nécessiter un dispositif mécanique délicat et de précision limitée.

Avec le procédé optique divulgué par le document cité, seul le maximum de l'intensité du flux lumineux intercepté donne une position angulaire bien définie des rainures de l'ébauche. Théoriquement ce maximum est bien marqué, mais en pratique, à cause du non-parallélisme des rayons lumineux et des défauts de symétrie de l'ébauche, le maximum est relativement plat et donc difficile à localiser. Cette difficulté, qui limite la précision du positionnement à environ 30 minutes d'arc, constitue le principal inconvénient du procédé.

L'objet principal de l'invention est de proposer un procédé de positionnement optique ne présentant pas ces inconvénients.

Pour atteindre cet objectif, le procédé de positionnement angulaire selon l'invention d'une pièce mobile en rotation autour d'un axe sur une machine-outil, la position de la pièce étant définie par un angle, dans une position prédéterminée correspondant à un angle donné, est particulièrement remarquable en ce qu'il consiste :
- à balayer par un faisceau laser mobile une plage traversant au moins une partie de la pièce de manière que cette partie, en arrêtant le faisceau, crée dans la plage une zone d'ombre qui présente une largeur variant avec l'angle, et prenant une valeur de référence pour l'angle donné;
- à mesurer une grandeur représentative de la largeur de la zone d'ombre;
- à tourner la pièce autour de l'axe jusqu'à ce que la grandeur atteigne une grandeur représentative de la valeur de référence, la pièce se trouvant alors dans la position prédéterminée; et
- à arrêter la pièce dans la position prédéterminée, cette position correspondant à l'angle donné.

Un avantage du procédé selon l'invention est de permettre d'atteindre une précision de positionnement angulaire élevée, d'environ 6 minutes d'arc.

Un autre objet de l'invention est de fournir un dispositif de positionnement angulaire précis, mettant en oeuvre le procédé de positionnement selon l'invention.

D'autres caractéristiques et avantages de la présente invention ressortiront de la description qui va suivre, faite en regard du dessin annexé et donnant, à titre explicatif mais nullement limitatif, un exemple de procédé de positionnement angulaire d'une ébauche de foret sur une machine à meuler. Sur ce dessin où les mêmes références se rapportent à des éléments analogues :
- la fig. 1 montre, dans une vue schématique, un foret fixé sur une machine à meuler, et une forme de réalisation du dispositif de positionnement angulaire à faisceau laser
- la fig. 3 est un diagramme montrant les principaux signaux qui apparaissent en différents points du circuit du dispositif de la fig. 1; et
- la fig. 4 montre une autre forme de réalisation du circuit du dispositif de positionnement.

La présente invention sera décrite en prenant comme exemple l'usinage par meulage, ou affûtage, de l'extrémité, appelée aussi pointe, d'une ébauche de foret. Cette opération, qui a pour but de former les arrêtes de coupe et de donner à la pointe une forme conique, est importante et elle doit être faite avec soin puisque c'est de cet usinage que dépendront essentiellement les qualités du foret.

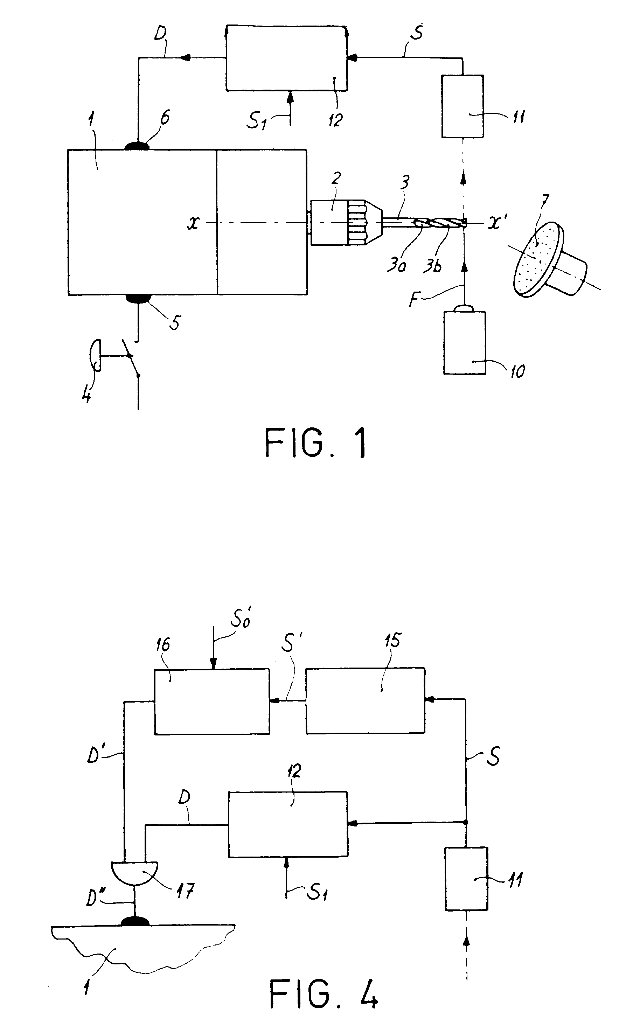

La fig. 1 montre schématiquement l'équipement nécessaire pour affûter un foret. La référence 1 désigne sur cette figure la poupée d'une machine à meuler. Cette poupée est fixée sur un bâti non représenté, et elle comporte un mandrin 2 pouvant tourner autour d'un axe xx′. Une ébauche de foret, référencée 3, en acier ou en métal dur fritté, est serrée dans le mandrin 2 pour être usinée. Cette ébauche, comme le mandrin, est donc mobile en rotation autour de l'axe xx′. La mise en rotation du mandrin 2 est obtenue à l'aide d'un moteur, disposé dans la poupée mais non représenté, en réponse à un signal appliqué, par exemple au moyen d'un bouton de commande 4, sur une borne de mise en marche 5. L'arrêt de la rotation est obtenue de la même façon en applicant un signal sur une borne d'arrêt 6. L'affûtage de la pointe de l'ébauche 3 est enfin réalisé au moyen d'une meule 7 pouvant se déplacer de manière bien définie par rapport au bâti de la machine.

L'ébauche 3 comporte, comme cela a déjà été relevé, des rainures qui, dans l'exemple représenté, sont de forme hélicoïdale et au nombre de deux, référencées respectivement 3a et 3b. L'extrémité de cette ébauche est disposée sur le trajet d'un fin faisceau laser mobile F de manière à l'intercepter, ce faisceau étant produit par un générateur laser 10 préférentiellement du type à semiconducteur. Le faisceau F se déplace parallèlement à lui-même, dans un plan perpendiculaire à l'axe xx′, et il est détecté par un récepteur laser 11. Ce récepteur fournit un signal S représentatif d'une grandeur caractéristique produite par le faisceau intercepté par l'ébauche, cette grandeur dépendant de la position angulaire des rainures 3a et 3b. Le signal S est comparé à un signal de référence S1 dans un circuit comparateur 12 de type connu, le signal S1 correspondant à une position angulaire prédéterminée de l'ébauche. Lorsque le signal S atteint la valeur S1, le comparateur 12 produit un signal D qui est appliqué sur la borne 6 de la machine à meuler.

Le fonctionnement de l'équipement est le suivant. L'ébauche 3 une fois fixée dans le mandrin 2, une pression sur le bouton de commande 4 met en rotation l'ébauche autour de l'axe xx′. Cette rotation provoque la variation du signal S et la production par le comparateur 12 du signal D dès qu'il y a égalité entre S et S1. Le signal D, étant appliqué sur la borne 6, arrête alors la rotation de l'ébauche dans une position correspondant à la position angulaire prédéterminée.

L'usinage de la pointe de l'ébauche 3 peut ensuite être fait au moyen de la meule 7 de manière connue.

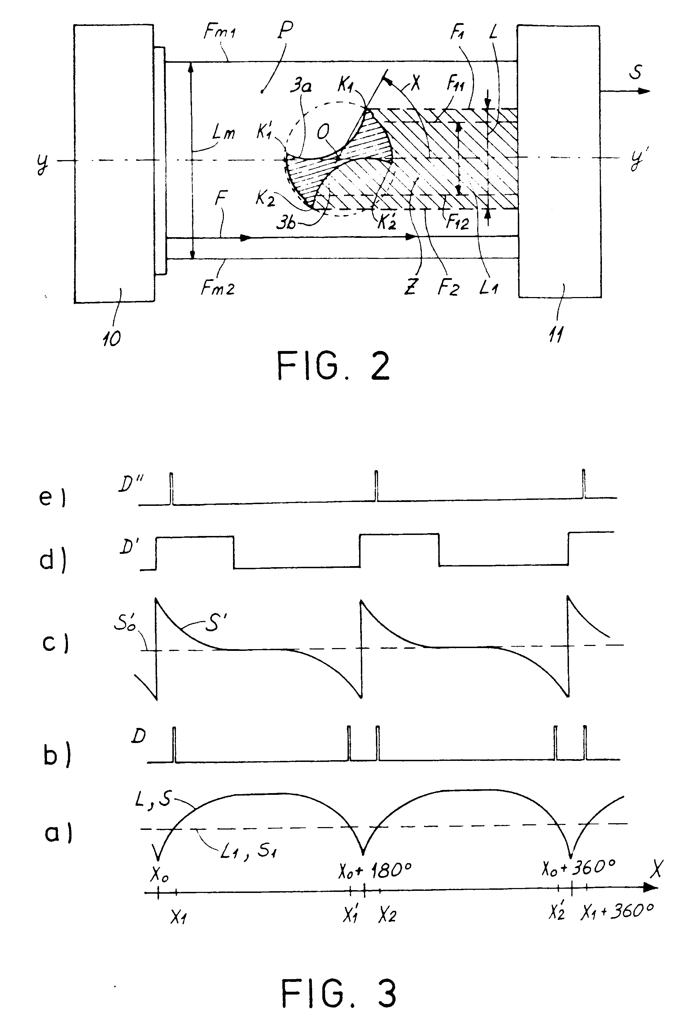

Le dispositif, formé des éléments référencés 10, 11 et 12, qui permet de placer l'ébauche 3 dans une position donnée sur la machine-outil, constitue l'invention proprement dite. Ce dispositif sera maintenant décrit plus en détail à l'aide des figures 2 et 3.

Sur la fig. 2 sont visibles le générateur laser 10, le récepteur laser 11, et l'ébauche 3 vue en bout. Le générateur 10 produit le faisceau F qui est formé de rayons laser parfaitement parallèles. Ce faisceau se déplace dans un plan, perpendiculaire à l'axe xx′, parallèlement à un axe yy′ de ce plan. Les axes xx′ et yy′ se rencontrent en un point 0, centre de la section de l'ébauche 3 par le plan contenant le faisceau F. Le déplacement du faisceau F a lieu entre deux positions extrêmes, référencées Fm1 et Fm2, séparées par une distance Lm supérieure au diamètre du foret.

Le faisceau F balaye donc une plage P qui coupe l'extrémité de l'ébauche 3, cette plage ayant une forme rectangulaire dont la largeur est égale à Lm et la longueur à la distance séparant le générateur 10 du récepteur 11. La section de l'ébauche 3, qui occupe sensiblement le centre de la plage P, présente deux paires de points anguleux K1, K1′ et K2, K2′. Ces paires de points sont définis par l'intersection de la surface délimitant le contour de l'ébauche 3 avec, respectivement, les surfaces délimitant la gorge 3a et la gorge 3b. Etant donné que la section de l'ébauche 3 est symétrique par rapport au centre 0, les points K1 et K2 sont diamétralement opposés et, dans l'exemple représenté, ils se trouvent sur le diamètre définissant le diamètre du foret. Les points K1′ et K2′ qui sont également diamétralement opposés, sont par contre séparés par une distance inférieure à celle séparant les points précédents. L'usinage de la pointe de l'ébauche doit être faite de manière que les arrêtes de coupe passent par les points K1 et K2. Il est par conséquent essentiel de connaître avec précision la position de ces points, position qui est donnée par exemple par l'angle X que fait la droite OK1 avec l'axe Oy′.

L'extrémité de l'ébauche 3, puisqu'elle traverse la plage P, crée dans celle-ci une zone d'ombre Z. Cette zone est délimitée par deux faisceaux F1 et F2 qui passent respectivement par les points K1 et K2 dans le cas représenté sur la fig. 2. Les faisceaux F1 et F2 sont séparés par une distance qui est égale à la largeur L de la zone d'ombre Z. Cette largeur L varie avec l'angle X et elle correspond à la grandeur caractéristique précédemment citée. Enfin le récepteur 11, qui reçoit le faisceau F et fournit le signal S, est agencé de manière que ce signal S soit représentatif de la largeur L. Par la suite il sera supposé que S est proportionnel à L.

Bien entendu, la plage P pourrait ne traverser qu'une partie de l'ébauche 3, par exemple celle se trouvant au dessus de l'axe yy′. Dans ce cas la largeur de la zone d'ombre serait donnée par la distance séparant le faisceau F1 de l'axe yy′.

Le générateur laser 10 et le récepteur 11 ne seront pas décrits en détail car ils font partie d'appareils de mesure bien connus et disponibles sur le marché, produits par exemple par la firme KEYENCE à Osaka, Japon. Ces appareils permettent de mesurer, rapidement et avec une précision de l'ordre du micromètre, une longueur, par exemple le diamètre de profils circulaires. A cet effet il suffit de placer le profil dans la plage balayée par le faisceau laser, le signal S fournissant alors, par exemple au moyen d'un affichage numérique, directement l'indication de la valeur du diamètre.

Une courbe typique montrant la variation de L, ou de S qui lui est proportionnel, en fonction de X est représentée en a) sur la fig. 3 dans le cas d'une ébauche comportant deux rainures. Cette courbe passe par un minimum très pointu, puisque c'est théoriquement un point de rebroussement, pour X = Xo+n.180° (n = 0, 1, 2, ...), et par un maximum assez plat entre deux minimum consécutifs.

Le minimum de L pourrait servir à définir une position angulaire prédéterminée de l'ébauche 3. Cependant un défaut de symétrie de l'ébauche se traduisant par l'inégalité des arcs K1, K2′ et K2, K1′ aurait alors pour effet d'aplatir le minimum de L et de diminuer sensiblement, comme dans le procédé décrit dans le document cité, la précision du positionnement.

Il est ainsi préférable de choisir comme position angulaire prédéterminée de l'ébauche 3, une position angulaire arbitraire correspondant à un angle donné X1 pour lequel la largeur L est égale à une largeur de référence L1, la valeur correspondante du signal S étant la valeur de référence S1. La largeur L1 définit une zone d'ombre qui est délimitée par deux faisceaux, référencés F11 et F12, ces faisceaux passant respectivement par les points K1 et K2 lorsque l'ébauche 3 se trouve dans la position angulaire X1.

La mise de l'ébauche dans la position angulaire donnée par X1 est obtenue, comme cela a déjà été expliqué, au moyen du circuit comparateur 12 représenté sur la fig. 1. Ce circuit, du type connu, reçoit les signaux S et S1, et il fournit le signal de sortie D, représenté en b) sur la fig. 3, ce signal se trouvant au niveau logique bas tant que S est différent de S1, et au niveau logique haut dès que S deviant égal à S1.

Le signal D étant appliqué sur la borne 6 alors que l'ébauche 3 est entraînée en rotation par le moteur, celui-ci est arrêté aussitôt que le signal D passe au niveau logique haut, soit pour X = X1, cet arrêt plaçant l'ébauche dans la position prédéterminée pour laquelle L = L1 et S = S1. Le positionnement sera bien entendu d'autant plus précis qu'il sera fait en un point où la variation de L en fonction de X est rapide, c'est-à-dire près de Xo dans le cas présent.

La condition L = L1 (ou S = S1) ne définit cependant pas uniquement l'angle X1, mais également des angles référencés X1′, X2 et X2′, comme le montre la fig. 3, lorsque l'ébauche fait un tour complet à partir de Xo. L'angle X1 correspondant la position prédéterminée, X2 est l'angle pour lequel, l'ébauche ayant effectué une rotation de 180°, les faisceaux F11 et F12 passent respectivement par K2 et K1. Pour l'angle X1′, ces faisceaux passent par contre respectivement par K2′ et K1′, et pour X2′ par K1′ et K2′.

L'usinage de la pointe de l'ébauche 3 ne peut être fait que lorsque cette ébauche se trouve dans les positions angulaires définies par X1 ou X2, les positions X1′ et X2′ ne convenant pas pour cette opération. Or, le dispositif qui vient d'être décrit, ne faisant aucune distinction entre ces positions angulaires, arrêtera la rotation de l'ébauche à la première de ces positions qu'il rencontrera, celle-ci dépendant de la position angulaire de départ.

Un dispositif de positionnement sélectif, permettant d'éviter l'arrêt de l'ébauche 3 dans les positions correspondant aux angles X1′ et X2′, est représenté sur la fig. 4. Ce dispositif comprend, à côté du circuit comparateur 12 déjà décrit, un circuit différenciateur 15, un autre circuit comparateur 16, et une porte ET à deux entrées référencée 17.

Le circuit 15 reçoit à l'entrée le signal S, et il fournit à sa sortie un signal S′, montré en c) sur la fig. 3, l'amplitude de ce signal étant une mesure de la pente de la tangente à la courbe représentant le signal S en fonction de X.

Il y a lieu de remarquer qu'en X1 et X2 le signal S est croissant et le signal S′ positif, alors qu'en X1′ et X2′ S est décroissant et S′ négatif. Le signe du signal S′ permet donc de discriminer les angles convenant à l'affûtage de l'ébauche des autres.

Le signal S′ est appliqué à cet effet au circuit comparateur 16 qui reçoit en outre un signal de référence So′, ce dernier signal étant égal à zéro dans le cas présent. La sortie du circuit 16 délivre un signal D′, représenté en d) sur la fig. 3, qui se trouve au niveau logique haut lorsque S′ est supérieur à So′, ou au niveau logique bas lorsque S′ est inférieur ou égal à So′. Ce circuit ne sera pas décrit car sa réalisation est à la portée de l'homme du métier. Les angles X1 et X2 sont donc encadrés par les parties du signal D′ se trouvant au niveau logique haut, et les angles X1′ et X2′ par les parties de ce signal se trouvant au niveau logique bas.

Enfin la porte 17 reçoit sur une entrée le signal D fourni par le comparateur 12, et sur l'autre entrée le signal D′, la sortie de cette porte délivrant un signal D˝ à la borne d'arrêt 6 du moteur. Les deux entrées de la porte 17 ne se trouvent simultanément au niveau logique haut, et par conséquent le signal D˝ représenté en e) sur la fig. 3, que pour les angles X1 et X2.

Le signal D˝ étant appliqué sur la borne 6, le dispositif représenté sur la fig. 4 n'arrêtera donc l'ébauche 3 que dans la position prédéterminée correspondant à l'angle X1, ou bien dans la position symétrique et équivalente correspondant à l'angle X2, quelle que soit la position angulaire initiale de l'ébauche.

Dans le dispositif de positionnement décrit, les signaux S, S', S1, So' et les circuits 12, 15, 16 sont du type analogique, mais ces signaux et ces circuits pourraient tout aussi bien être du type numérique.

## Revendications

1. Procédé de positionnement angulaire destiné à placer une pièce à usiner (3) mobile en rotation autour d'un axe (xx') sur une machine-outil, la position de la pièce étant définie par un angle (X), dans une position prédéterminée correspondant à un angle donné (X1), caractérisé en ce qu'il consiste :
- à balayer par un faisceau laser mobile (F) une plage (P) traversant au moins une partie de ladite pièce (3) de manière que ladite partie, en arrêtant ledit faisceau, crée dans ladite plage une zone d'ombre (Z) qui présente une largeur (L) variant avec ledit angle (X), et prenant une valeur de référence (L1) pour ledit angle donné (X1);
- à mesurer une grandeur représentative de ladite largeur (L) de la zone d'ombre;
- à tourner ladite pièce (3) autour dudit axe (xx') jusqu'à ce que ladite grandeur atteigne une grandeur représentative de ladite valeur de référence (L1), la pièce se trouvant alors dans ladite position prédéterminée; et
- à arrêter ladite pièce (3) dans la position prédéterminée, ladite position correspondant audit angle donné (X1).

2. Procédé selon la revendication 1, caractérisé en ce que ladite plage (P) est plane et disposée perpendiculairement audit axe (xx').

3. Procédé selon la revendication 2, caractérisé en ce que ledit faisceau se déplace parallèlement à une direction fixe (yy'), et en ce que ladite largeur (L) de la zone d'ombre (Z) est mesurée perpendiculairement à ladite direction.

4. Procédé selon l'une des revendications précédentes, caractérisé en ce que ladite plage (P) traverse entièrement ladite pièce (3).

5. Procédé selon l'une des revendications précédentes, caractérisé en ce que ladite plage (P) traverse au moins une partie de ladite pièce près de l'endroit devant être usiné.

6. Procédé selon l'une des revendications précédentes, caractérisé en ce que ladite machine-outil est une machine comportant une meule (7) pour affûter ladite pièce (3).

7. Procédé selon l'une des revendications prédédentes, caractérisé en ce que ladite pièce à usiner (3) est un outil de coupe.

8. Procédé selon la revendication 7, caractérisé en ce que ledit outil de coupe est en métal dur fritté.

9. Dispositif de positionnement angulaire, mettant en oeuvre le procédé selon la revendication 1, destiné à placer une pièce à usiner (3) mobile en rotation autour d'un axe (xx') sur une machine-outil, la position de la pièce étant définie par un angle (X), dans une position prédéterminée correspondant à un angle donné (X1), caractérisé en ce qu'il comprend :
- des moyens (10) pour produire un faisceau laser mobile (F), ledit faisceau bal ayant une plage (P) qui traverse au moins une partie de ladite pièce (3) de manière que ladite partie, en arrêtant ledit faisceau, crée dans ladite plage une zone d'ombre (Z) qui présente une largeur (L) variant avec ledit angle (X);
- des moyens (11) pour mesurer ladite largeur (L) de la zone d'ombre et fournir un signal de mesure (S) représentatif de ladite largeur, ledit signal prenant une valeur de référence (S1) pour ledit angle donné (X1);
- des moyens (12) pour comparer ledit signal de mesure (S) avec ladite valeur de référence (S1) et fournir un signal de comparaison (D) lorsque le signal de mesure est égal à la valeur de référence;
- des moyens (4, 5) pour mettre en rotation ladite pièce (3) autour dudit axe (xx'); et
- des moyens (6) pour arrêter la rotation de ladite pièce (3) en réponse audit signal de comparaison (D), la pièce se trouvant alors dans ladite position angulaire prédéterminée correspondant audit angle donné (X1).

10. Dispositif selon la revendication 9, caractérisé en ce qu'il comporte en outre des moyens (15, 16, 17) pour sélectionner, parmi plusieurs positions angulaires de ladite pièce (3) pour lesquelles ledit signal de mesure (S) prend ladite valeur de référence (S1), la position correspondant à ladite position angulaire prédéterminée.

## Claims

1. Method for angularity positioning designated for bringing a mobile work piece (3) to be machined into rotation around an axis (xx') on a machine tool, the position of the work piece being defined by an angle (X), in a predetermined position corresponding to a given angle (X1) characterised in that it consists in
- scanning a region (P) with a mobile laser beam (F) crossing at least one part of the work piece (3) so that the part when stopping the beam creates a shadow area (Z) in the region having a breadth (L) varying with the angle (X), and takes on a reference value (L1) for the given value (X1);
- measuring a representative size of the breadth (L) of the shadow area;
- rotating the work piece (3) around the axis (xx') until the size reaches a representative size of the reference value (L1), the work piece then being in the predetermined position and in
- holding the work piece (3) in the predetermined position, the position corresponding to the given angle (X1).

2. Method according to claim 1 characterized in that the region (P) is plane and disposed perpendicularly to the axis (xx').

3. Method according to claim 2 characterized in that the beam displaces parallel to a fixed direction (yy') and in that the breadth (L) of the shadow area (Z) is measured perpendicularly to the direction.

4. Method according to one of the preceding claims characterized in that the region (P) entirely crosses the work piece (3).

5. Method according to one of the preceding claims characterized in that the region (P) at least crosses one part of the work piece near to the point to be machined.

6. Method according to one of the preceding claims characterized in that the machine tool is a machine comprising a grinding wheel (7) for grinding the work piece (3).

7. Method according to one of the preceding claims characterized in that the work piece to be machined is a cutting tool.

8. Method according to claim 7 characterized in that the cutting tool is made of sintered metal carbide.

9. Apparatus for angularity positioning applying the method according to claim 1, designated for bringing a mobile work piece (3) to be machined into rotation around an axis (xx') on a machine tool, the position of the work piece being defined by an angle (X), in a predetermined position corresponding to a given angle (X1) characterized in that it comprises:
- means (10) for producing a mobile laser beam (F), the beam scanning a region (P) crossing at least one part of the work piece (3) so that the part when stopping the beam creates a shadow area (Z) in the region having a breadth (L) varying with the angle (X);
- means (11) for measuring the breadth (L) of the shadow area and for providing a measuring signal (S) representative to the breadth, the signal taking on a reference value (S1) for the angle (X1).
- means (12) for comparing the measuring signal (S) with the reference value (S1) and for providing a comparative signal (D) when the measuring signal is equal to the reference value;
- means (4, 5) for bringing the work piece (3) into rotation around the axis (xx') and
- means (6) for stopping the rotation of the work piece (3) as a response to the comparative signal (D), the work piece then being in the predetermined angularity position corresponding to the given angle (X1).

10. Apparatus according to claim 9 characterized in that it furthermore comprises means (15, 16, 17) for selecting between various angularity positions of the work piece (3) for which the measuring signal (S) takes on the reference value (S1), the position corresponding to the predetermined angularity position.

## Patentansprüche

1. Verfahren zur Winkelverstellung zur Drehung eines zu bearbeitenden beweglichen Werkstückes (3) um eine Achse (xx') auf einer Werkzeugmaschine, wobei die Position des Werkstücks durch einen Winkel (X) in einer einem bestimmten Winkel (X1) entsprechenden vorgegebenen Position bestimmt wird, dadurch gekennzeichnet, daß es darin besteht:
- einen Bereich (P) mit einem beweglichen Laserstrahl (F) abzutasten, der wenigstens einen Teil des Werkstückes (3) überstreicht, so daß der genannte Teil wenn er den Strahl abfangt, in dem Bereich ein Schattengebiet (Z) hervorruft, das eine mit dem Winkel (X) veränderliche Breite (L) aufweist, und einen Bezugswert (L1) für den bestimmten Winkel (X1) darstellt;
- eine Repräsentativgröße der Breite (L) des Schattengebiets zu messen;
- das Werkstück (3) um die genannte Achse (xx') zu drehen, bis die genannte Größe eine Repräsentativgröße des Referenzwertes (L1) erreicht, wobei sich das Werkstück dann in der genannten festgelegten Position befindet und darin,
- das Werkstück (3) in der festgelegten Position zu halten, wobei die Position dem bestimmten Winkel (X1) entspricht.

2. Verfahren nach Anspruch 1, dadurch gekennzeichnet, daß der Bereich (P) eben ist und senkrecht zu der Achse (xx') angeordnet ist.

3. Verfahren nach Anspruch 2, dadurch gekennzeichnet, daß sich der Strahl parallel zu einer feststehenden Richtung (yy') verschiebt und daß die Breite (L) des Schattengebietes (Z) senkrecht zu der genannten Richtung gemessen wird.

4. Verfahren nach einem der vorstehenden Ansprüche, dadurch gekennzeichnet, daß der Bereich (P) das Werkstück (3) vollständig überquert.

5. Verfahren nach einem der vorstehenden Ansprüche, dadurch gekennzeichnet, daß der Bereich (P) wenigstens einen Teil des Werkstückes in der Nähe der zu bearbeitenden Stelle überquert.

6. Verfahren nach einem der vorstehenden Ansprüche, dadurch gekennzeichnet, daß die Werkzeugmaschine eine Maschine mit einer Schleifscheibe (7) zum Schleifen des Werkstückes (3) ist.

7. Verfahren nach einem der vorstehenden Ansprüche, dadurch gekennzeichnet, daß das zu bearbeitende Werkstück ein Schneidwerkzeug ist.

8. Verfahren nach Anspruch 7, dadurch gekennzeichnet, daß das Schneidwerkzeug aus Sinterkarbid besteht.

9. Vorrichtung zur Winkelverstellung zur Durchführung des Verfahrens nach Anspruch 1 zur Drehung eines zu bearbeitenden beweglichen Werkstücks (3) um eine Achse (xx') auf einer Werkzeugmaschine, wobei die Position des Werkstücks durch einen Winkel (X) in einer einem bestimmten Winkel (X1) entsprechenden vorgegebenen Position bestimmt wird, gekennzeichnet durch
- eine Einrichtung (10) zur Erzeugung eines beweglichen Laserstrahls (F), wobei der Strahl einen Bereich (P) abtastet, der mindestens einen Teil des Werkstückes (3) überquert, so daß der Teil, wenn er den Strahl abfängt, in dem Bereich ein Schattengebiet (Z) hervorruft, das eine sich mit dem Winkel (X) verändernde Breite (L) aufweist;
- eine Einrichtung (11) zur Messung der Breite (L) des Schattengebietes und zur Bereitstellung eines für die Breite repräsentativen Meßsignals (S), wobei das Signal einen Bezugswert (S1) für den Winkel (X1) darstellt;
- eine Einrichtung (12) zum Vergleichen des Meßsignals (S) mit dem Bezugswert (S1) und zur Bereitstellung eines Vergleichssignals (D), wenn das Meßsignal gleich dem Bezugswert ist;
- eine Einrichtung (4, 5) zum Drehen des Werkstücks (3) um die Achse (xx') und
- eine Einrichtung (6), die auf das Vergleichssignal (D) das Werkstück (3) stillsetzt, wobei sich das Werkstück dann in der dem bestimmten Winkel (X1) entsprechenden festgelegten Winkelposition befindet.

10. Vorrichtung nach Anspruch 9, dadurch gekennzeichnet, daß sie darüber hinaus Einrichtungen (15, 16, 17) aufweist, um zwischen mehreren Winkelpositionen des Werkstückes (3), für die das Meßsignal (S) den Bezugswert (S1) annimmt, die der festgelegten Winkelposition entsprechende Position auszuwählen.
